# DEMANDE DE BREVET EUROPEEN

(11) **EP 1 881 262 A1**
(43) Date de publication de la demande: **23.01.2008**
(21) Numéro de dépôt: 07112258.4
(22) Date de dépôt: 11.07.2007
(51) Int. Cl.: F21S 8/10, F21V 14/02, F21V 19/00, F21V 29/00, B60Q 1/068, F21Y 101/02

(54) **Dispositif d'éclairage à diodes électroluminescentes équipé d'un système de refroidissement extérieur**

(30) Priorité: 21.07.2006 FR 0606712
(71) Demandeur: VALEO VISION, 93012 Bobigny (FR)
(72) Inventeur: Albou, Pierre, 75013, PARIS (FR); Duval, Christophe, 93500, PANTIN (FR)
(74) Mandataire: Renous Chan, Véronique

(57) **Abrégé**

L'invention concerne un dispositif d'éclairage pour véhicule automobile comportant un boîtier (3) fermé par une glace de protection, ledit boîtier comprenant :
- au moins une diode électroluminescente (1) montée sur une platine mobile (2),
- un système d'actionnement de la platine comportant une pluralité de bras de maintien, un des bras de maintien ayant une première extrémité (66) fixée dans le boîtier (3) et une seconde extrémité comportant un élément de rotule (64) articulé à l'intérieur d'une contre forme (61) fixée sur la platine,
tel que ce bras de maintien traverse le boîtier (3) pour former un radiateur (65) extérieur au boîtier, la contre forme et le bras de maintien étant réalisés dans un matériau assurant une conduction de chaleur de la platine mobile jusqu'au radiateur.

## Description

L'invention concerne un dispositif d'éclairage à diodes électroluminescentes, pour véhicule automobile, équipé d'un système de refroidissement au moins partiellement extérieur au boîtier du dispositif d'éclairage. Dans le dispositif d'éclairage de l'invention, le radiateur est formé à une extrémité d'un bras de maintien du système d'actionnement de la platine sur laquelle sont montées les diodes électroluminescentes.

L'invention concerne également un véhicule automobile comportant un tel dispositif d'éclairage.

L'invention trouve des applications dans le domaine des véhicules automobiles et, en particulier, dans le domaine de l'éclairage à diodes électroluminescentes pour véhicule automobile.

Généralement, un véhicule automobile comporte des dispositifs d'éclairage situés à l'avant du véhicule, appelés projecteurs. Chaque dispositif d'éclairage comporte un boîtier fermé par une glace de protection, dans lequel est installée une source lumineuse.

Actuellement, dans la plupart des dispositifs d'éclairage, la source lumineuse est réalisée au moyen d'une lampe à ampoule telle qu'une lampe à décharge, une lampe halogène, etc. Les dispositifs d'éclairage comportent alors chacun une seule lampe ou, éventuellement, deux lampes pour certains types d'éclairage de route. Ces lampes présentent l'avantage d'avoir un haut rendement et une forte luminance. Elles présentent l'inconvénient d'émettre une forte chaleur localement. En effet, chaque source lumineuse constitue, dans le dispositif d'éclairage, une source de chaleur avec un point concentré unique et très chaud. Par exemple, dans le cas d'une lampe halogène, le filament de la lampe présente une chaleur de l'ordre de 3000° C. Le ballon de verre de l'ampoule présente une température supérieure à 400° C, et le culot de l'ampoule présente une température autour de 200° C. En outre, ces lampes émettent des rayonnements infrarouges. Pour orienter le faisceau lumineux de la source lumineuse, la source est généralement placée à proximité d'un réflecteur, généralement un miroir en métal, qui concentre le rayonnement infra rouge, qui peut ainsi créer un autre point chaud, sur la glace de fermeture du projecteur par exemple.

Par ailleurs, les boîtiers des dispositifs d'éclairage doivent être parfaitement étanches à l'eau liquide, notamment à la pluie et à la neige fondue. Il est, par conséquent, difficile de ventiler l'intérieur du boîtier pour le refroidir.

Pour résoudre ces problèmes de concentration de chaleur à l'intérieur du boîtier, il est possible de réaliser la source lumineuse au moyen d'une ou de plusieurs diodes électroluminescentes. Ces diodes électroluminescentes, ou LED, sont généralement associées en modules et montées sur une platine mobile. En effet, la mobilité de la platine permet de régler la direction du faisceau lumineux engendré par la source lumineuse et de l'optique qui lui est associée, pour corriger la portée dudit faisceau. Autrement dit, la mobilité de la platine permet de régler la position des diodes et de l'optique qui leur est associée, verticalement et latéralement. Le réglage latéral est destiné à être réalisé en usine, lors du montage du dispositif d'éclairage sur le véhicule, ou par un spécialiste après changement d'un projecteur. Le réglage vertical, appelé aussi correction, est réalisé par le conducteur du véhicule. Sur certains véhicules, le réglage vertical est dynamique, c'est-à-dire qu'il est réalisé en permanence, de façon automatique, suivant des paramètres liés à la route et aux conditions de circulation.

La chaleur émise par une diode électroluminescente est faible par rapport à celle d'une lampe à ampoule, avec des températures de l'ordre de 100 à 150°C. La chaleur totale émise par les diodes dépend directement du nombre de diodes. Toutefois, les diodes électroluminescentes étant le plus souvent regroupées en modules, à l'intérieur du boîtier, la source lumineuse totale est formée de plusieurs points lumineux répartis dans l'ensemble du boîtier. La chaleur émise par cette source lumineuse est donc répartie sur l'ensemble des modules de diodes et, par conséquent, répartie dans le boîtier. Une source lumineuse à diodes permet ainsi d'offrir un rendement important, pouvant atteindre celui d'une lampe classique, tout en créant une chaleur moins concentrée, ce qui évite l'existence de points de températures trop élevées.

Cependant, même si la température d'une diode électroluminescente est relativement faible par rapport à la température d'une lampe classique et même si les points chauds sont répartis dans le boîtier, la chaleur provenant des diodes doit tout de même être dissipée. En effet, les diodes électroluminescentes, celles employées en éclairage automobile plus particulièrement, sont des diodes de puissance qui supportent mal leur propre chaleur. Lorsqu'une diode électroluminescente chauffe, elle perd de sa performance d'éclairage. Il est donc nécessaire de refroidir ces diodes électroluminescentes. Pour refroidir un composant électronique, et en particulier une diode de puissance, il est connu de monter le composant à refroidir sur un radiateur, éventuellement avec une couche de pâte thermique. En électronique, on associe généralement un radiateur à chaque composant. Le composant est alors refroidi avec de l'air ambiant. Dans le cas où le composant est monté dans un dispositif d'éclairage de véhicule, l'air ambiant est l'air du boîtier du dispositif d'éclairage, c'est-à-dire un air ambiant relativement chaud, à une température de l'ordre de 100° C. Il est donc difficile de refroidir efficacement les diodes électroluminescentes au moyen de l'air ambiant présent dans le dispositif d'éclairage.

Aussi, pour refroidir les diodes électroluminescentes d'un dispositif d'éclairage pour véhicule, on cherche généralement à établir un contact thermique entre les diodes électroluminescentes et une partie fraîche du dispositif d'éclairage. La seule partie fraîche du dispositif d'éclairage est la glace de fermeture du boîtier, qui est en contact avec l'extérieur du dispositif. Cependant, cette glace est généralement réalisée en matériau plastique. Or, le plastique a la particularité d'être un très bon isolant thermique. La glace n'est donc pas apte à transmettre efficacement la chaleur des diodes vers l'extérieur du dispositif.

Pour conduire la chaleur de l'intérieur du dispositif d'éclairage, vers l'extérieur du dispositif, il peut être envisagé d'utiliser un radiateur formé sur la face arrière de la platine, ce radiateur traversant le boîtier pour évacuer la chaleur en extérieur du boîtier. Toutefois, comme les platines sont mobiles, il existe nécessairement des moyens d'actionnement de cette platine. Ces moyens d'actionnement comportent généralement un bras de maintien fixe et deux bras de maintien mobiles, fixés d'une part sur l'arrière de la platine et d'autre part sur le boîtier. Ces bras mobiles et fixe sont répartis sur la surface arrière de la platine, formant les sommets d'un triangle. Ils occupent ainsi une place importante, dans le boîtier, gênant le passage du radiateur. Pour que le radiateur puisse passer de la platine jusqu'au boîtier, il a été envisagé d'utiliser une tresse de cuivre qui a l'avantage de pouvoir être souple. En effet, le cuivre est un bon conducteur thermique. Cependant, pour être souple, la tresse doit être réalisée au moyen d'une pluralité de fils souples, donc de fils de petite section. Or, de tels fils ont une conductivité thermique assez faible. Pour obtenir une bonne conductivité thermique, il est nécessaire d'utiliser des fils de cuivre de section élevée, ce qui a pour effet de réduire la souplesse de la tresse de cuivre, et donc d'empêcher son passage à travers le système d'actionnement des platines. Il en est de même pour une lame métallique qui est bonne conductrice thermique, uniquement lorsque sa section est suffisamment épaisse, ce qui rend alors la lame métallique rigide, entraînant les mêmes inconvénients qu'énoncés précédemment.

Le document GB-A-2 402 203 décrit un exemple de dispositif d'éclairage à diodes électroluminescentes dans lesquelles les diodes sont refroidies au moyen d'un radiateur massif utilisant une jupe à soufflet. Cependant, les soufflets ont un coût relativement élevé par rapport au coût d'un dispositif d'éclairage classique, ce entraînerait une augmentation considérable du coût du dispositif d'éclairage. En outre, leur fiabilité est problématique dans le cas des projecteurs.

L'invention a justement pour but de remédier aux inconvénients des techniques exposées précédemment. A cette fin, l'invention propose un dispositif d'éclairage, pouvant être produit à un coût correct, dont la source lumineuse est réalisée au moyen d'au moins une diode électroluminescente montée sur une platine actionnée par un système d'actionnement équipé d'un bras de maintien fixe. Ce bras fixe traverse au moins partiellement le boîtier formant un radiateur en extérieur dudit boîtier. Ce bras fixe est réalisé dans un matériau thermiquement conducteur de façon à transmettre la chaleur provenant des diodes jusque vers l'extérieur du boîtier.

De façon plus précise, l'invention concerne un dispositif d'éclairage pour véhicule automobile comportant un boîtier fermé par une glace de protection, ledit boîtier comprenant :
- au moins une diode électroluminescente montée sur une platine mobile,
- un système d'actionnement de la platine comportant une pluralité de bras de maintien, un des bras de maintien (notamment fixe) ayant une première extrémité fixée dans le boîtier et une seconde extrémité comportant un élément de rotule articulé à l'intérieur d'une contre forme fixée sur la platine, de sorte que ce bras de maintien traverse le boîtier pour former un radiateur extérieur au boîtier, la contre forme et le bras de maintien étant réalisés dans un matériau assurant une conduction de chaleur de la platine mobile jusqu'au radiateur.

Avantageusement, système d'actionnement de la platine comporte trois bras de maintien placés aux trois sommets d'un triangle avec deux des bras de maintien mobiles et un des bras de maintien fixe, le bras de maintien traversant le boîtier pour former le radiateur extérieur étant ce bras de maintien fixe.

L'invention peut comporter également une ou plusieurs des caractéristiques suivantes :
- la contre forme et l'élément de rotule du bras fixe sont reliés thermiquement par une couche d'un lubrifiant thermiquement conducteur.
- le lubrifiant est à base de sulfure de molybdène chargé.
- le lubrifiant est chargé en fibres et en éléments sphériques métalliques.
- le bras servant de radiateur et la contre forme sont métalliques.
- le radiateur comporte des ailettes formant une surface d'échange thermique, en extérieur du boîtier.
- la platine est réalisée dans un matériau conducteur de chaleur.
- la platine est une cavité partiellement remplie de fluide, placée verticalement dans le boîtier.
- la platine est un caloduc.
- un premier bras de maintien mobile est commandé par un actionneur assurant un mouvement vertical de la platine.
- un second bras de maintien mobile est commandé par un actionneur assurant un mouvement latéral de la platine.
- le bras de maintien formant radiateur est en cuivre ou en bronze phosphoreux.

L'invention concerne également un véhicule équipé d'un dispositif d'éclairage tel que décrit précédemment.

### Brève description des dessins

La figure 1 représente schématiquement l'intérieur d'un dispositif d'éclairage à diodes électroluminescentes équipé du système de refroidissement selon l'invention.

La figure 2 représente le bras fixe dans le dispositif d'éclairage selon l'invention.

### Description détaillée de modes de réalisation de l'invention

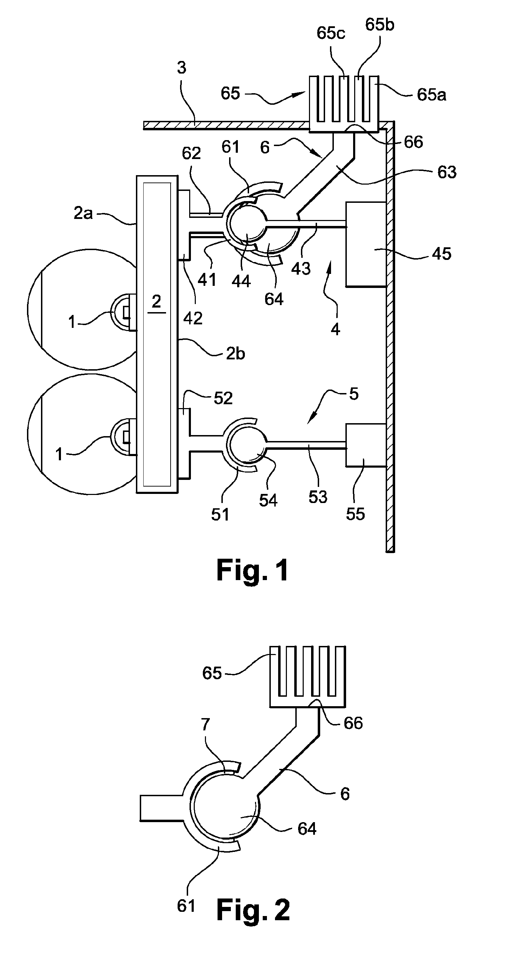

La figure 1 représente une partie d'un boîtier d'un dispositif d'éclairage selon l'invention. Ce boîtier 3, réalisé par exemple dans un matériau plastique, est un isolant thermique. Il est fermé par une glace de protection, non représentée sur la figure 1. A l'intérieur de ce boîtier 3, sont installées des diodes électroluminescentes 1 formant la source lumineuse du dispositif d'éclairage. Ces diodes électroluminescentes 1 sont montées sur une platine mobile 2. Dans l'exemple de la figure 1, on a représenté une seule platine 2 sur laquelle sont montées des diodes électroluminescentes 1. Il est entendu que plusieurs platines peuvent être installées dans le boîtier 3 et former chacune, avec les diodes correspondantes, un module de diode.

Chaque module de diode est orientable. En effet, comme expliqué précédemment, la portée du faisceau lumineux engendré par la source lumineuse doit pouvoir être corrigée, soit manuellement par le conducteur, soit automatiquement depuis le véhicule, de façon dynamique ou non. De même, les modules de diodes doivent pouvoir être réglés latéralement en usine ou par un spécialiste. Pour cela, les platines sont mobiles. Leur mobilité est obtenue au moyen d'un système d'actionnement équipé de trois bras de maintien formant trois points d'appui. Ces trois bras de maintien sont fixés sur la face arrière 2b de la platine, c'est-à-dire sur la face opposée à la face 2a supportant les diodes. Ces trois bras sont placés en triangle sur la face arrière 2b de la platine, c'est-à-dire qu'ils sont situés chacun à un coin de la platine. Ils forment ainsi les sommets d'un triangle. Un bras de maintien 6 est un bras fixe. Deux bras de maintien 4 et 5 sont des bras mobiles. Le bras mobile 4 assure le mouvement latéral de la platine 2 autour d'un axe de rotation formé par le bras fixe 6 et le bras 5. Le bras mobile 5 assure le mouvement vertical de la platine 2 autour de l'axe formé par le bras fixe et le bras 4.

Dans l'exemple de la figure 1, lorsqu'on est face à la face avant 2a de la platine, le bras mobile 4 se trouve en haut à droite de la platine, le bras mobile 5 se trouve en bas à gauche de la platine et le bras fixe 6 es trouve en haut à gauche de la platine. Il est à noter, toutefois, que les bras mobiles et fixe peuvent être placés différemment dès lors que le bras fixe constitue un point de rotation des deux bras mobiles.

Le bras fixe 6 est positionné de façon fixe par rapport au boîtier. Le bras fixe 6 comporte une première extrémité 66 formant le radiateur et une seconde extrémité 64 formant une sphère, les deux extrémités étant reliées par une tige 63 rectiligne ou coudée.

La seconde extrémité constitue un élément de rotule 64. Cet élément de rotule 64, appelé aussi sphère ou simplement rotule, est placé à l'intérieur d'une contre forme 61 fixée sur la face arrière 2b de la platine par l'intermédiaire d'une patte de fixation, ou attache 62.

La première extrémité 66 du bras fixe 6 étant fixée dans le boîtier, et donc solidaire du boîtier, la contre forme 61, appelée aussi capsule, est apte à tourner autour de la sphère 64 lorsque l'un ou l'autre des bras mobiles est actionné. La sphère 64 forme un pivot définissant les axes de rotation passant par les bras mobiles. L'ensemble rotule 64 et contre forme 61 constitue ainsi une articulation offrant une rotation sur une large circonférence de la sphère, permettant un déplacement aussi bien vertical que latéral de la platine 2.

Selon l'invention, le bras fixe 6 comporte, à sa première extrémité 66, un radiateur 65 apte à dissiper la chaleur provenant des diodes électroluminescentes 1. La seconde extrémité 66 du bras fixe 6 traverse au moins partiellement le boîtier 3 pour transmettre la chaleur provenant des diodes vers l'extérieur du boîtier. Pour transmettre la chaleur des diodes 1 vers le radiateur 65, le bras fixe 6 est réalisé dans un matériau thermiquement conducteur. De même, la capsule 61 et l'attache 62 sont réalisées dans un matériau thermiquement conducteur.

Le bras fixe 6 et de la capsule 61 peuvent être métalliques, par exemple en cuivre, en bronze phosphoreux ou en tout autre matériau thermiquement conducteur suffisamment résistant pour former un bras de maintient. Le bras fixe 6, au niveau de sa première extrémité, est surmoulé par du plastique formant le boîtier 3. Il peut aussi être surmoulé avec de préférence un joint d'étanchéité dans une cavité traversante réalisée lors du moulage du boitier.

Le radiateur 65 peut être simplement une extrémité de la tige 63, de section supérieure ou égale à celle de ladite tige, traversant le boîtier 3. Pour une meilleure dissipation de la chaleur, le radiateur 65 peut comporter des ailettes, comme montré sur la figure 1, ou des picots ou tout autre élément permettant d'augmenter la surface d'échange thermique. Dans le mode de réalisation de la figure 1, le radiateur 65 comporte des ailettes 65a, 65b, ..., situées en extérieur du boîtier 3.

Pour transférer la chaleur depuis les diodes 1 jusqu'au radiateur extérieur 65, il est nécessaire d'assurer une liaison thermique entre tous les éléments séparent les diodes 1 du radiateur 65. Pour cela, les diodes 1 sont montées, selon une technique classique, sur une platine mobile 2 en matériau conducteur de chaleur. L'attache 62, également en matériau conducteur de chaleur, est fixée par une liaison thermique sur la platine ; l'attache 62 peut aussi être réalisée d'une seule pièce avec la platine 2, par exemple par moulage ou par injection. De même, la capsule 61 est réalisée d'une seule pièce avec l'attache 62.

Un contact thermique est assuré entre la capsule 61 et la rotule 64. Ce contact thermique peut être réalisé au moyen d'une couche de matériau lubrifiant thermiquement conducteur. Ce matériau lubrifiant thermiquement conducteur peut être n'importe quel lubrifiant, dès lors que ce lubrifiant est apte à conduire la chaleur. On a représenté, sur la figure 2, l'articulation formée par la rotule 64 et la capsule 61. La rotule 64 est reliée à la capsule 61 par l'intermédiaire d'une couche de lubrifiant 7. Ce lubrifiant a l'avantage de faciliter la rotation de la capsule autour de la rotule et surtout d'assurer la liaison thermique entre ces deux éléments.

Dans un mode de réalisation préféré de l'invention, le lubrifiant 7 est choisi de façon à ne pas se dégrader en vieillissant et, en particulier, à ne pas dégazer. Le lubrifiant peut être, par exemple, du sulfure de molybdène chargé en éléments métalliques, en particulier, en fibres et en sphères métalliques. Plus précisément, ce lubrifiant à base de sulfure de molybdène est chargé d'une poudre d'aluminium composée de sphères et de fibres d'aluminium. Ce lubrifiant forme une graisse mécaniquement bonne qui, en plus, assure bonne une conductivité thermique. La sphère 64 et la capsule 61 sont adaptées l'une à l'autre de sorte qu'il y a un faible espace entre les deux. Une fine couche du lubrifiant 7 est donc suffisante pour permettre le contact thermique entre ces deux éléments.

Pour assurer un bon transfert de la chaleur depuis la diode la plus éloignée du bras fixe, c'est-à-dire la diode située en bas de la platine 2 dans l'exemple de la figure 1, la platine 2 est réalisée de façon à être bonne conductrice thermique. Pour cela, la platine peut être une simple tôle conductrice ou, plus généralement, une plaque métallique conductrice.

La platine 2 peut aussi être une cavité avec fluide. Dans ce cas, la platine est réalisée au moyen d'une cuve partiellement remplie d'un fluide apte à bouillir, par exemple de l'eau et de l'alcool. En bas de la platine, c'est-à-dire à proximité de la diode la plus éloignée, le fluide bout. Sous l'effet de l'ébullition, la chaleur remonte vers la partie haute de la cuve. On a ainsi un transfert de chaleur du bas vers le haut. Ce transfert de chaleur est dû à un changement d'état du liquide en gaz associé à un mouvement par gravité.. Dans ce cas, il est préférable de placer le radiateur vers le haut du boîtier, comme montré sur la figure 1, le bras fixe 6 étant placé alors dans la partie haute du boîtier, de sorte qu'il traverse la paroi supérieure du boîtier 3

La platine peut également être un caloduc en forme de platine, c'est-à-dire un caloduc sur lequel sont montées les diodes électroluminescentes. A toutes fins utiles, on rappelle qu'un caloduc est un élément ayant une enveloppe conductrice thermique, par exemple une enveloppe en cuivre, remplie d'un matériau poreux qui assure le transfert de chaleur par changement de phase et par mouvement de capillarité. Plus précisément, le matériau poreux est imbibé d'un fluide, par exemple de l'eau et de l'alcool. L'alcool s'évapore au point chaud et se condense au point froid puis revient, par capillarité, vers le point chaud, ce qui assure un transfert de la chaleur d'une extrémité vers une autre extrémité du caloduc. Le caloduc a l'avantage de ne pas être tributaire de la gravité et, par conséquent, de pouvoir être utilisé dans toutes les positions, c'est-à-dire pas nécessairement verticale.

Dans un autre mode de réalisation de l'invention, les diodes sont fixées sur une platine 2 en métal, elle-même fixée sur un caloduc formant la capsule 61 et l'attache 62. De même, le bras fixe 6 avec sa rotule 64 peut être réalisé sous la forme d'un caloduc transférant la chaleur au radiateur extérieur 65.

Dans un mode de réalisation de l'invention, le système d'actionnement est équipé d'actionneurs permettant la commande de mouvements des bras mobiles. Un actionneur 45 commande le bras mobile 4. Un actionneur 55 commande le bras mobile 5. Le réglage vertical des diodes électroluminescentes peut ainsi être réalisé de façon automatique, voir dynamique, à partir de l'actionneur 55. De même, le réglage latéral des diodes électroluminescentes peut être réalisé de façon automatique, voir dynamique, à partir de l'actionneur 45. Avec un actionneur pour chaque bras mobile, et en prévoyant un débattement suffisamment important de la capsule 61 autour de la rotule 64 du bras fixe, on réalise une fonction DBL (Dynamic Bending Light). La fonction DBL est une fonction d'éclairage permettant d'éclairer la route en suivant la trajectoire du véhicule. On obtient alors un dispositif d'éclairage à diodes électroluminescentes et à fonction DBL.

## Revendications

1. - Dispositif d'éclairage pour véhicule automobile comportant un boîtier (3) fermé par une glace de protection, ledit boîtier comprenant :
- au moins une diode électroluminescente (1) montée sur une platine mobile (2),
- un système d'actionnement de la platine comportant une pluralité de bras de maintien, un des bras de maintien ayant une première extrémité (66) fixée dans le boîtier (3) et une seconde extrémité comportant un élément de rotule (64) articulé à l'intérieur d'une contre forme (61) fixée sur la platine,
**caractérisé en ce que** ce bras de maintien traverse le boîtier (3) pour former un radiateur (65) extérieur au boîtier, la contre forme et le bras de maintien étant réalisés dans un matériau assurant une conduction de chaleur de la platine mobile jusqu'au radiateur.

2. - Dispositif selon la revendication précédente, **caractérisé en ce que** le système d'actionnement de la platine comporte trois bras de maintien (4, 5, 6) placés aux trois sommets d'un triangle avec deux des bras de maintien mobiles (4, 5), et un des bras de maintien fixe (6), le bras de maintien traversant le boîtier pour former le radiateur extérieur (56) étant le bras de maintien fixe (6).

3. - Dispositif selon la revendication 1 ou 2, **caractérisé en ce que** la contre forme (61) et l'élément de rotule (64) du bras de maintien, notamment du bras fixe, sont reliés thermiquement par une couche d'un lubrifiant (7) thermiquement conducteur.

4. - Dispositif selon la revendication 3, **caractérisé en ce que** le lubrifiant est à base de sulfure de molybdène chargé.

5. - Dispositif selon la revendication 4, **caractérisé en ce que** le lubrifiant est chargé en fibres et en éléments sphériques métalliques.

6. - Dispositif selon l'une quelconque des revendications précédentes, **caractérisé en ce que** le bras de maintien formant radiateur, notamment le bras fixe (6), et la contre forme sont métalliques.

7. - Dispositif selon l'une quelconque des revendications précédentes, **caractérisé en ce que** le radiateur comporte des ailettes (65a, 65b, 65c) formant une surface d'échange thermique, en extérieur du boîtier.

8. - Dispositif selon l'une quelconque des revendications précédentes, **caractérisé en ce que** la platine est réalisée dans un matériau conducteur de chaleur.

9. - Dispositif selon l'une quelconque des revendications 1 à 7, **caractérisé en ce que** la platine est une cavité partiellement remplie de fluide, placée verticalement dans le boîtier.

10. - Dispositif selon l'une quelconque des revendications 1 à 7, **caractérisé en ce que** la platine est un caloduc.

11. - Dispositif selon l'une quelconque des revendications précédentes, **caractérisé en ce qu'**un premier bras de maintien mobile est commandé par un actionneur (55) assurant un mouvement vertical de la platine.

12. - Dispositif selon l'une quelconque des revendications précédentes, **caractérisé en ce qu'**un second bras de maintien mobile est commandé par un actionneur (45) assurant un mouvement latéral de la platine.

13. - Dispositif selon l'une quelconque des revendications précédentes, **caractérisé en ce que** le bras de maintien formant radiateur est en cuivre ou en bronze phosphoreux.
